**Europäisches Patentamt**

**European Patent Office**

**Office européen des brevets**

(19)

(11) Veröffentlichungsnummer: **0 008 564**
**B1**

(12) # EUROPÄISCHE PATENTSCHRIFT

(45) Veröffentlichungstag der Patentschrift:
14.03.84

(21) Anmeldenummer: **79810068.1**

(22) Anmeldetag: **07.08.79**

(51) Int. Cl.³: **H 02 J 7/14,** B 62 J 5/06,
B 60 Q 1/00, H 02 H 7/18

(54) **Schaltungsanordnung für die automatische Umschaltung der Beleuchtungseinrichtung eines Fahrzeugs, insbesondere eines Fahrrads.**

(30) Priorität: **21.08.78 CH 8822/78**

(43) Veröffentlichungstag der Anmeldung:
**05.03.80 Patentblatt 80/5**

(45) Bekanntmachung des Hinweises auf die Patenterteilung:
**14.03.84 Patentblatt 84/11**

(84) Benannte Vertragsstaaten:
**BE FR GB IT LU NL SE**

(56) Entgegenhaltungen:
**DE - A - 2 519 837**
**DE - A - 2 521 462**
**FR - A - 1 031 943**
**US - A - 3 646 354**

**ELECTRONICS, Band 41, Nr. 7, 1. April 1968, New York, USA, D.L. HASKARD: "Voltage sensor limits discharge in batteries", Seite 62**

(73) Patentinhaber: **Gilardoni, Angelo, Quartiere Ghitello, CH-6834 Morbio Inferiore (CH)**

(72) Erfinder: **Drixl, Othmar, Via Pizzamiglio, I-6833 Vacallo (CH)**

(74) Vertreter: **Baggiolini, Raimondo, Racheli & Fiammenghi Via San Gottardo 15, CH-6900 Lugano (CH)**

## Schaltungsanordnung für die automatische Umschaltung der Beleuchtungseinrichtung eines Fahrzeugs, insbesondere eines Fahrrads

Die Erfindung betrifft eine Schaltungseinrichtung für die automatische Umschaltung der Beleuchtungseinrichtung eines Fahrzeugs, insbesondere eines Fahrrads, vom Generatorbetrieb auf Batteriebetrieb und umgekehrt, wobei die Batterie durch den Generator aufladbar ist, welche Schaltungseinrichtung eine Regelschaltung mit einem ersten Transistor, einem ersten Widerstand und einem zweiten Widerstand enthält, um die Stromversorgung der Beleuchtungseinrichtung von der Batterie abzuschalten, wenn die Batteriespannung unter einen vorgegebenen Wert fällt, sowie einen Umschalter der in einer Stelle die Regelschaltung abschaltet.

Es ist bekannt, mit einem Fahrraddynamo eine aufladbare Batterie zu speisen, so daß die Fahrradbeleuchtungseinrichtung auch bei stehendem Fahrrad mit Hilfe der Batterie betrieben werden kann. In diesem Zusammenhang wird auf die US-PSen 2 488 021 und 3 753 000 sowie auf die FR-PSen 1 031 943 und 1 063 662 verwiesen.

Aus der US-PS 3 904 920 ist eine Schaltungsanordnung bekannt, bei der Sensoren mit Gleichrichtern verbunden sind, die den durch den Generator gelieferten Wechselstrom gleichrichten wenn die Spannung an den Enden des Gleichrichters einen bestimmten Wert übersteigt, wobei dann der Strom aus dem Generator zu den Lampen der Beleuchtungseinrichtung fließt, während bei Abfall der Spannung an den Enden des Gleichrichters unterhalb des bestimmten Wertes die Lampen der Beleuchtungseinrichtung durch eine Batterie versorgt werden.

Insbesondere sind dabei, im Vergleich mit vorliegender Erfindung, die US-PS 3 646 354 und der Artikel der Zeitschrift »Electronics«, Band 41, Nr. 7, 1. April 1968, Seite 62, D. L. Haskard: »Voltage sensor limits discharge in batteries«, zutreffend.

Die Schaltungseinrichtung gemäß vorliegender Erfindung unterscheidet sich von den Schaltungseinrichtungen gemäß den zwei durch die genannten zwei Transistors erwähnten Veröffentlichungen: der zweite Transistor ist vom ersten Transistor gesteuert und weist einen geringen ohmischen Widerstand auf, welcher den Durchlaß des gewünschten starken Stromes, zur Speisung der Lampen, ermöglicht.

Mit anderen Worten: Der zweite Transistor ersetzt das Relais des US-PS 3 646 354, aber er ist viel kleiner und weist keine mechanischen, oxydierenden Kontakte auf. Die Arbeitsweise der genannten zwei Transistoren ist ähnlich der der zwei Transistoren des Schemas auf Seite 62 des erwähnten Artikels: »Voltage sensor limits discharge in batteries«.

Das Haskard-Schema braucht aber eine Zener-Diode, welche mit vorliegender Erfindung überflüssig geworden ist.

Überdies weist das Haskard-Schema keinen Wechselstromgenerator und keine Gleichrichter-Diode auf, um die Entladung der Batterie über den Generator zu vermeiden, wenn das Fahrrad stillsteht.

Die Schaltungseinrichtung gemäß der Erfindung ist nunmehr dadurch gekennzeichnet, daß der Generator an der Beleuchtungseinrichtung durch eine Parallelschaltung, die in einem ersten Parallelzweig eine erste Diode und in einem zweiten Parallelzweig eine zweite Diode enthält, verbunden ist, wobei an den zu der zweiten Diode gehörigen Parallelzweig die aufladbare Batterie angeschlossen ist, wobei die zweite Diode so gepolt ist, daß die Entladung der Batterie durch den Generator verhindert wird, und daß nach der Anschlußstelle der Batterie, in dem Parallelzweig der zweiten Diode, die Emitter-Kollektor-Strecke eines zweiten Transistors eingeschaltet ist, wobei die Basis des zweiten Transistors durch einen dritten Widerstand an den Kollektor eines ersten Transistors angeschlossen ist, dessen Emitter durch den zweiten Widerstand mit seiner Basis und über den ersten Widerstand mit dem Emitter des Transistors verbunden ist; wobei die die Dioden enthaltende Parallelschaltung mit den Lampen (Scheinwerferlampe und Rücklichtlampe) der Fahrradbeleuchtung verbunden ist; wobei die jeweils anderen Anschlüsse des Generators, der aufladbaren Batterie und der Lampen an Masse gelegt sind, wobei der Umschalter in einer Schaltstellung den Emitter des ersten Transistors mit der Masse, während er in einer zweiten Schaltstellung den Kollektor dieses Transistors mit der Masse und in einer dritten Schaltstellung weder den Emitter noch den Kollektor des ersten Transistors mit der Masse verbindet.

Die Schaltungsanordnung gemäß der Erfindung unterscheidet sich außerdem von den bekannten Schaltungsanordnungen dadurch, daß der Umschalter mindestens drei Schaltstellungen aufweist. In der ersten Schaltstellung wird eine vorzugsweise aus Transistoren und Widerständen aufgebaute Schaltung eingeschaltet, so daß der Generator bei laufendem Fahrzeug die Lampen der Beleuchtungseinrichtung mit Strom versorgt und gleichzeitig die Batterie lädt, und bei stehendem Fahrzeug die Lampen der Beleuchtungseinrichtung durch die Batterie versorgt werden, die automatisch abgeschaltet wird, wenn die Ladung der Batterie und somit ihre Spannung einen vorbestimmten Wert, vorzugsweise 50%, unterschreitet. In der zweiten Stellung des Umschalters hingegen kann die Batterie bis zu ihrer völligen Erschöpfung die Lampen der Beleuchtungseinrichtung speisen. In der dritten Stellung des Umschalters schließlich wird der gesamte elektronische Schaltkreis abgeschaltet, so daß die Lampen der Beleuchtungseinrichtung nunmehr unmittelbar durch den Generator gespeist werden können. Auf diese Weise wird eine rationell aufgebaute, äußere wirksame Schaltungsanordnung geschaffen.

Weitere Vorteile, Einzelheiten und Merkmale der Erfindung ergeben sich aus der nachstehenden, anhand einer einzigen beiliegenden Figur erfolgenden Beschreibung eines bevorzugten Ausführungsbeispiels.

In der die Erfindung veranschaulichenden Figur, die die Schaltungsanordnung für eine Fahrradbeleuchtung betrifft, ist mit G der Generator bzw. der Fahrraddynamo bezeichnet, der Wechselstrom liefert. An den Generator G ist eine Parallelschaltung, mit einer Diode D1 und einer Diode D2 angeschlossen. An den zur Diode D2 gehörigen Parallelzweig ist auf die Diode D2 folgend eine aufladbare Batterie B angeschlossen. Ferner liegt nach der Anschlußstelle der Batterie B, in dem Parallelzweig der Diode D2, die Emitter-Kollektorstrecke eines Transistors T2. Die Basis des Transistors T2 ist über einen Widerstand R3 mit dem Kollektor eines Transistors T1 verbunden, dessen Emitter über einen Widerstand R2 mit seiner Basis verbunden ist, die außerdem über einen Widerstand R1 mit dem Emitter des Transistors T2 verbunden ist. Die die Dioden D1 und D2 enthaltende Parallelschaltung ist mit den Lampen Lp (Scheinwerferlampe) und La (Rücklicht) der Fahrradbeleuchtung verbunden. Die jeweils anderen Anschlüsse des Generators G, der aufladbaren Batterie B und der Lampen Lp und La sind an Masse gelegt. Ein Umschalter C verbindet in einer ersten Schaltstellung A den Emitter des Transistors TI mit Masse, während er in einer zweiten Schaltstellung M den Kollektor des Transistors T1 mit Masse verbindet. In einer dritten Schaltstellung 0 sind weder der Emitter noch der Kollektor des Transistors T1 mit Masse verbunden.

Die in der Figur gezeigte Schaltungsanordnung arbeitet wie folgt:

Übersteigt die Spannung am Emitter des Transistors T2, also die vom Generator G oder von der Batterie gelieferte Spannung, einen durch den Spannungsteiler R1 und R2 vorgegebenen Wert, so wird in der Schaltstellung A des Umschalters C der Transistor T1 und damit der Transistor T2 durchgeschaltet. Die Lampen Lp und La werden dann bei stehendem Fahrrad von der Batterie versorgt. Sinkt jedoch die Batteriespannung B unter den vorgegebenen Wert, so sperrt der Transistor T1 und damit auch der Transistor T2, so daß eine vollständige Entladung der Batterie B in der Schalterstellung A des Umschalters C in jedem Fall vermieden wird.

In der Schalterstellung M des Umschalters C wird der Transistor T1 derart umgangen, daß nunmehr der Transistor T2 immer in der geöffneten Stellung gehalten wird. Die Batterie B kann sich daher bei stehendem Fahrrad bis zu ihrer völligen Erschöpfung entladen.

In der Schalterstellung 0 des Umschalters C schließlich sind alle Transistoren gesperrt, so daß eine Stromversorgung der Lampen Lp und La aus dem Generator G nur mehr über den die Diode D1 enthaltenden Parallelzweig möglich ist. Die Stellung 0 des Umschalters C ist vor allem für den Fall eines Defekts in der Ladeschaltungsanordnung, bzw. der elektronischen Regelungsschaltung, vorgesehen.

Wie ohne weiteres erkennbar, wird die Batterie B immer dann aufgeladen, wenn die Generatorspannung die Batteriespannung übersteigt.

Die Schaltungseinrichtung gemäß vorliegender Erfindung unterscheidet sich von den Schaltungseinrichtungen gemäß den zwei bereits erwähnten, zunächstliegenden Veröffentlichungen, die US-PS 3 646 354 und der Artikel der Zeitschrift »Electronics«, Band 41, Nr. 7, 1. April 1968, Seite 62, D. L. Haskard »Voltage sensor limits discharge in batteries«, durch die zwei Transistoren T1 und T2: Der Transistor T2 ist vom Transistor T1 gesteuert und weist einen geringen ohmischen Widerstand auf, welcher den Durchlaß des gewünschten starken Stromes, zur Speisung der Lampen La und Lp, ermöglicht.

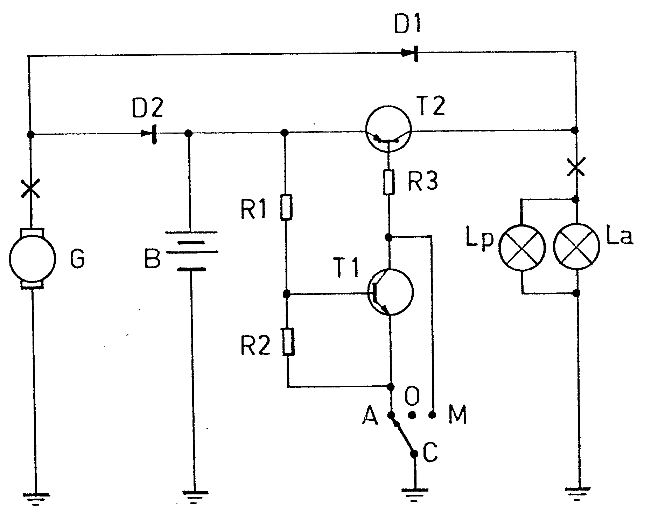

Mit anderen Worten: Der Transistor T2 ersetzt das Relais 24 (Fig. 2) des US-PS 3 646 354, aber er ist viel kleiner und weist keine mechanischen, oxydierenden Kontakte (26, 30) auf. Die Arbeitsweise der genannten zwei Transistoren T1 und T2 ist ähnlich der der zwei Transistoren Q1 und Q2 des Schemas auf Seite 62 der Artikel in der Zeitschrift: Electronics.

Das Haskard Schema braucht aber die Zener-Diode D1, welche mit vorliegender Erfindung überflüssig geworden ist.

Überdies weist das Haskard-Schema keinen Wechselstromgenerator G und keine Gleichrichter-Diode D2 auf um die Entladung der Batterie B über den Generator G zu vermeiden, wenn das Fahrrad stillsteht.

## Patentansprüche

1. Schaltungsanordnung für die automatische Umschaltung der Beleuchtungseinrichtung eines Fahrzeugs, insbesondere eines Fahrrads, vom Generatorbetrieb auf Batteriebetrieb und umgekehrt, wobei die Batterie (B) durch den Generator (G) aufladbar ist, welche Schalteinrichtung eine Regelschaltung mit einem ersten Transistor (T₁), einem ersten Widerstand (R₁) und einem zweiten Widerstand (R₂) enthält, um die Stromversorgung der Beleuchtungseinrichtung von der Batterie abzuschalten, wenn die Batteriespannung unter einen vorgegebenen Wert fällt, sowie einen Umschalter (C), der in einer Stelle die Regelschaltung abschaltet, dadurch gekennzeichnet, daß der Generator (G) an der Beleuchtungseinrichtung (La, Lp) durch eine Parallelschaltung, die in einem ersten Parallelzweig eine erste Diode (D₁) und in einem zweiten Parallelzweig eine zweite Diode (D₂) enthält, verbunden ist, wobei an den zu der zweiten Diode (D₂) gehörigen Parallelzweig die aufladbare Batterie (B) angeschlossen ist, wobei die zweite Diode (D₂) so gepolt ist, daß die Entladung der Batterie durch den Generator verhindert wird, und daß nach der Anschlußstelle der Batterie (B), in dem Parallelzweig der zweiten Diode (D₂), die Emitter-Kollektor-Strecke eines zweiten Transistors (T₂) eingeschaltet ist, wobei die Basis des zweiten Transistors (T₂) durch einen dritten Widerstand (R₃) an den Kollektor eines ersten Transistors (T₁) angeschlossen ist, dessen Emitter durch den zweiten Widerstand (R₂) mit seiner Basis und über den ersten Widerstand (R₁) mit dem Emitter des Transistors (T₂) verbunden ist; wobei die die Dioden (D₁, D₂) enthaltende Parallelschaltung mit den Lampen (Scheinwerferlampe Lp und Rücklichtlampe La) der Fahrradbeleuchtung verbunden ist; wobei die jeweils anderen Anschlüsse des Generators (G), der aufladbaren Batterie (B) und der Lampen (Lp und La) an Masse gelegt sind, wobei der Umschalter (C) in einer Schaltstellung (A) den Emitter des ersten Transistors (T₁) mit der Masse, während er in einer zweiten Schaltstellung (M) den Kollektor dieses Transistors (T₁) mit der Masse und in einer dritten Schaltstellung (0) weder den Emitter noch den Kollektor des ersten Transistors (T₁) mit der Masse verbindet.

2. Schaltungsanordnung nach Patentanspruch 1, dadurch gekennzeichnet, daß die Batterie (B) in der ersten Schaltstellung (A) des Umschalters (C) abgeschaltet wird, wenn die Ladung der Batterie unter die Hälfte ihrer Kapazität fällt.

## Claims

1. Control arrangement for the automatic switching of the lighting system of a vehicle, especially of a bicycle, from generator operation to battery operation and vice versa, in which the battery (B) can be charged by the generator (G) the arrangement comprising a control circuit with a first transistor (T₁), a first resistance (R₁) and a second resistance (R₂) in order to switch off the power supply of the lighting system from the battery when the battery voltage falls below a prescribed value, together with a changeover switch (C) which switches off te conrol circuit in the position, characterised by the generator (G) being connected to the lighting system (La, Lp) by a parallel circuit, which contains a first diode (D₁) in a first parallel branch and a second diode (D₂) in a second parallel branch, in which the chargeable battery (B) is connected to the parallel branch belonging to the second diode (D₂), with the second diode (D₂) having its polarity such that discharging of the battery through the generator is prevented, and that after the point of attachment of the battery (B) the emitter-commutator stage of a second transistor (T₂) is included in the parallel branch of the second diode (D₂), with the base of the second transistor (T₂) bein connected by a third resistance (R₃) to the commutator of a first transistor (T₁), the emitter of which is connected with the base through the second resistance (R₂) and through the first resistance (R₁), with the emitter of the translator (T₂), the parallel circuit containing the diodes (D₁, D₂) is connected to the lamps (headlapm Lp and rearlamp La of the bicycle lighting system; the other terminals there may be of the generator (G), of the chargeable battery (B) and of the lamps (Lp and La) are earthed, with the changeover switch (C) in one switch position (A) connecting the emitter of the first transistor (T₁) with earth, whilst in a second position (M) it connects the commutator of this transistor (T₁) with earth, and in a third switch position (O) it connects neither the emitter nor the commutator of the first transistor (T₁) with earth.

2. General arrangement in accordance with Patent Claim 1, characterised by the battery (B) in the first switch position (A) of the changeover switch (C) being switched off when the charge of the battery falls below half its capacity.

## Revendications

1. Dispositif de circuit pour la commutation automatique du dispositif d'éclairage d'un véhicule, en particulier d'une bicyclette, avec passage de l'alimentation par génératrice à l'alimentation par batterie et inversement, la batterie (B) étant rechargeable par la génératrice (G), ce dispositif de circuit contenant un circuit de réglage avec un premier transistor (T1), une première résistance (R1) et une deuxième résistance (R2) pour séparer de la batterie l'alimentation en courant du dispositif d'éclairage quand la tension de la batterie tombe au-dessous d'une valeur prédéterminée ainsi qu'un commutateur (C) qui, dans une position, débranche le circuit de réglage, caractérisé en ce que la génératrice G est raccordée au dispositif d'éclairage (La, Lp) par un montage en parallèle qui contient une première diode (D1) dans une branche du montage en parallèle et une seconde diode (D2) dans une seconde branche du montage en parallèle, tandis que cette branche appartenant à la seconde diode (D2) est reliée à la batterie rechargeable (B), la seconde diode (D2) étant branchée de façon à empêcher la décharge de la batterie à travers la génératrice et en ce qu'après le point de raccordement de la batterie (B) dans la branche de l'alimentation en parallèle comprenant la seconde diode (D2) est inséré le chemin émetteur-collecteur d'un second transistor (T2) dont la base est reliée par une troisième résistance (R3) au collecteur du premier transistor (T1) dont l'émetteur est relié par l'intermédiaire de la deuxième résistance (R2) à sa base qui est en outre reliée par l'intermédiaire de la première résistance (R1) à l'émetteur du second transistor (T2), le montage en parallèle qui contient les diodes (D1, D2) étant relié aux lampes (lampe de phare Lp et feu arrière La), tandis que les autres bornes de la génératrice (G), de la batterie rechargeable (B) et des lampes (Lp, La) sont reliées à la masse, le commutateur (C) reliant dans une position (A) l'émetteur du premier transistor (T1) à la masse tandis que, dans une deuxième position (M), il relie le collecteur de ce transistor (T1) à la masse et que, dans une troisième position (O), ni l'émetteur, ni le collecteur de ce premier transistor (T1) ne sont reliés à la masse.

2. Dispositif de commutation selon la revendication 1, caractérisé en ce que la batterie (B) est mise hors circuit dans la première position de commutation (A) du commutateur (C) quand la charge de la batterie tombe au-dessous de la moitié de sa capacité.